Europäisches Patentamt

European Patent Office

Office européen des brevets

(19)

(11) **EP 1 072 568 B1**

(12) **EUROPÄISCHE PATENTSCHRIFT**

(45) Veröffentlichungstag und Bekanntmachung des Hinweises auf die Patenterteilung:
**02.10.2002 Patentblatt 2002/40**

(51) Int Cl.⁷: **C04B 33/13**, C09C 1/42, C04B 35/634

(21) Anmeldenummer: **00111071.7**

(22) Anmeldetag: **02.06.2000**

(54) **Siliciumorganische Verbindungen enthaltende tonkeramische Mischungen**

Ceramic mixtures containing clay and silicium-based organic compounds

Mélanges argile - composés organiques à base de silicium

(84) Benannte Vertragsstaaten:
**AT BE CH CY DE DK ES FI FR GB GR IE IT LI LU MC NL PT SE**

(30) Priorität: **29.07.1999 DE 19935812**

(43) Veröffentlichungstag der Anmeldung:
**31.01.2001 Patentblatt 2001/05**

(73) Patentinhaber: **Wacker-Chemie GmbH**
**81737 München (DE)**

(72) Erfinder:
• **Gerhardinger, Dieter**
**84323 Massing (DE)**
• **Felix, Karl-Heinz**
**84367 Tann (DE)**

• **Mittermeier, Johannes**
**84503 Altötting (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**EP-A- 0 927 748**

• **DATABASE WPI Section Ch, Week 199723 Derwent Publications Ltd., London, GB; Class A97, AN 1997-255296 XP002142704 & JP 09 087004 A (AIDA KAGAKU KOGYO KK), 31. März 1997 (1997-03-31)**

**Beschreibung**

Die Erfindung betrifft die Verwendung von tonkeramischen Mischungen, welche siliciumorganische Verbindungen enthalten.

Tonkeramische Mischungen für die Herstellung von tonkeramischen Erzeugnissen enthalten als wesentliche Bestandteile Tonmineralien und Wasser, welches als Anmachwasser bezeichnet wird. Die plastischen bis gießbaren tonkeramischen Mischungen werden zu Formkörpern verarbeitet, welche getrocknet und danach zu tonkeramischen Erzeugnissen gebrannt werden.

Während der Trocknung erfolgt eine Volumenabnahme der Formkörper, welche als lineare Schwindung oder Schrumpfung bezeichnet wird. Die Trocknung muß so gesteuert werden, daß die Formkörper keine Risse bilden. Die Gefahr der Rißbildung ist reduziert bei gleichmäßiger Wasserabgabe des Formkörpers und damit verbundener geringer linearer Schwindung.

DE-A-19846744 beschreibt ungebrannte Tonmineralgemische, die zur Modifizierung der Oberfläche Silane enthalten.

Der vorliegenden Erfindung liegt die Aufgabe zugrunde, tonkeramische Mischungen bereitzustellen, welche beim Trocknen eine reduzierte Rißbildung zeigen.

Gegenstand der Erfindung ist die Verwendung von tonkeramischen Mischungen, welche siliciumorganische Verbindungen enthalten, zur Herstellung von gebrannten tonkeramischen Erzeugnissen.

Die aus den siliciumorganische Verbindungen enthaltenden tonkeramischen Mischungen hergestellten Formkörper trocknen gleichmäßig und weisen eine geringere lineare Trockenschwindung gegenüber aus tonkeramischen Mischungen ohne siliciumorganische Verbindungen hergestellten Formkörpern auf.

Auch weisen die aus den tonkeramischen Mischungen hergestellten tonkeramischen Erzeugnisse gemessen nach dem Brand eine geringere lineare Schwindung gegenüber aus tonkeramischen Mischungen ohne siliciumorganische Verbindungen hergestellten tonkeramischen Erzeugnissen auf.

Die tonkeramischen Mischungen umfassen Ton, siliciumorganische Verbindungen und Wasser. Die bevorzugten Tonmineralien sind Kaolinit und Illit.

Bei den siliciumorganischen Verbindungen handelt es sich bevorzugt um Verbindungen aus Einheiten der allgemeinen Formel (I)

$$R^1_a(OR^2)_bSiO_{\frac{4-a-b}{2}} \qquad (I),$$

worin

**R¹** ein Wasserstoff oder einwertigen, gegebenenfalls mit Halogenatomen oder Aminogruppen substituierten Kohlenwasserstoffrest,

**R²** Wasserstoffatom, Alkalimetallatom oder einwertigen gegebenenfalls mit Halogenatomen oder Aminogruppen substituierten Kohlenwasserstoffrest,

**a** den Wert 0, 1, 2, 3 oder 4 und

**b** den Wert 0, 1, 2, 3 oder 4 bedeutet,

mit der Maßgabe, daß die Summe aus **a** und **b** kleiner oder gleich 4 ist.

Bei der Organosiliciumverbindung aus Einheiten der allgemeinen Formel (I) handelt es sich um Silane, wenn die Summe aus **a** und **b** 4 ist.

Bei den Organosiliciumverbindungen aus Einheiten der allgemeinen Formel (I) handelt es sich um Organosiloxane, wenn die Summe aus **a** und **b** kleiner oder gleich 3 ist.

Bei den Verbindungen aus Einheiten der allgemeinen Formel (I) handelt es sich um Kieselsäureester, wenn **a** 0 ist.

Bei den Verbindungen aus Einheiten der allgemeinen Formel (I) handelt es sich um Alkalisiliconate, wenn **R²** Wasserstoffatom oder Alkalimetallatom bedeutet.

Beispiele für den gegebenenfalls mit Halogenatomen oder Aminogruppen substituierten Kohlenwasserstoffrest **R¹** sind gegebenenfalls substituierte Kohlenwasserstoffreste mit 1 bis 20 Kohlenstoffatomen, wobei Kohlenwasserstoffreste mit 1 bis 8 Kohlenstoffatomen, insbesondere der Methyl-, Ethyl- und der Isooctylrest, besonders bevorzugt sind.

Beispiele für Reste **R¹** sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Alkenylreste, wie der Vinyl-, Allyl, n-5-Hexenyl-, 4-Vinylcyclohexyl- und der 3-Norbornenylrest; Cycloalkylreste, wie Cyclopentyl-, Cyclohexyl-, 4-Ethylcyclohexyl-, Cycloheptylreste, Norbornylreste und Methylcyclohexylreste; Arylreste, wie der Phenyl-, Biphenylyl-, Naphthyl- und Anthrylund Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste $R^1$ sind halogenierte Kohlenwasserstoffreste, wie der Chlormethyl-, 3-Chlorpropyl-, 3-Brompropyl-, 3,3,3-Trifluorpropyl- und 5,5,5,4,4,3,3-Heptafluorpentylrest, sowie der Chlorphenyl-, Dichlorphenyl- und Trifluortolylrest; und aminosubstituierte Kohlenwasserstoffreste deren Amino-Substituenten die allgemeine Formel II

$$R^3_2NR^4\text{-} \hspace{6cm} \text{(II)},$$

aufweisen, worin

$R^3$    Wasserstoff oder einwertiger, gegebenenfalls halogensubstituierter Kohlenwasserstoffrest mit 1 bis 20, insbesondere mit 1 bis 8 Kohlenstoffatomen, bedeutet und

$R^4$    zweiwertiger Kohlenwasserstoffrest mit 1 bis 20, insbesondere mit 1 bis 8 Kohlenstoffatomen, bedeutet.

Beispiele für Rest $R^3$ sind die für Rest $R^1$ gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (II) mindestens ein Wasserstoffatom gebunden.

Bevorzugt handelt es sich bei Rest $R^4$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^4$ sind der Methylen-, Ethylen-, Propylen-, Butylen-, Cyclohexylen-, Octadecylen-, Phenylen- und Butenylenrest.

Beispiele für aminosubstituierte Kohlenwasserstoffreste $R^1$ sind:

$H_2N(CH_2)_3\text{-},$
$H_2N(CH_2)_2NH(CH_2)_2\text{-},$
$H_2N(CH_2)_2NH(CH_2)_3\text{-},$
$H_2N(CH_2)_2\text{-},$
$H_3CNH(CH_2)_3\text{-},$
$C_2H_5NH(CH_2)_3\text{-},$
$H_3CNH(CH_2)_2\text{-},$
$C_2H_5NH(CH_2)_2\text{-},$
$H_2N(CH_2)_4\text{-},$
$H_2N(CH_2)_5\text{-},$
$H(NHCH_2CH_2)_3\text{-},$
$C_4H_9NH(CH_2)_2NH(CH_2)_2\text{-},$
$\text{cyclo-}C_6H_{11}NH(CH_2)_3\text{-},$
$\text{cyclo-}C_6H_{11}NH(CH_2)_2\text{-},$
$(CH_3)_2N(CH_2)_3\text{-},$
$(CH_3)_2N(CH_2)_2\text{-},$
$(C_2H_5)_2N(CH_2)_3\text{-}$ und
$(C_2H_5)_2N(CH_2)_2\text{-}.$

$R^2$    Wasserstoffatom, Alkalimetallatom oder einwertigen gegebenenfalls mit Halogenatomen oder Aminogruppen substituierten Kohlenwasserstoffrest,

Bevorzugte Alkalimetallatome $R^2$ sind Natrium und Kalium.

Beispiele für einwertigen gegebenenfalls mit Halogenatomen oder Aminogruppen substituierten Kohlenwasserstoffrest $R^2$ sind die vorstehend für $R^1$ angegebenen Beispiele.

Bevorzugte Kohlenwasserstoffreste $R^2$ sind Alkylreste mit 1 bis 20 Kohlenstoffatomen, wobei Alkylreste mit 1 bis 8 Kohlenstoffatomen, insbesondere der Methyl-, Ethyl-, Propylund der Isooctylrest, besonders bevorzugt sind.

Bevorzugte siliciumorganische Verbindungen sind Alkalisiliconate aus 1 bis 5 Einheiten der allgemeinen For-

mel (I), in denen

**R¹** Alkylrest mit 1 bis 6 Kohlenstoffatomen, insbesondere Methyl-, Ethyl-, n-Propyl- und Isopropylrest,

**R²** Wasserstoff, Natrium oder Kalium,

**a** den Wert 1 oder 2, vorzugsweise 1 und

**b** den Wert 1, 2 oder 3 bedeutet und

30 bis 70 Mol-% der Reste **R¹** Natrium oder Kalium sind.

Bei den bevorzugten Silanen der allgemeinen Formel (I) sind

**R¹** einwertiger, gegebenenfalls mit Halogenatomen oder Aminogruppen substituierter Kohlenwasserstoffrest, vorzugsweise unsubstituierter Alkylrest mit 1 bis 15 Kohlenstoffatomen, insbesondere Methyl-, Ethyl-, n-Propyl- und Isopropylrest,

**R²** Alkylreste mit 1 bis 6 Kohlenstoffatomen, insbesondere Methyl-, Ethyl-, n-Propyl- und Isopropylrest,

**a** 1 oder 2, vorzugsweise 1 und

**b** 2 oder 3, vorzugsweise 3.

Besonders bevorzugt sind i-Octyltrimethoxysilan und i-Octyltriethoxysilan.

Bevorzugte siliciumorganische Verbindungen sind auch Kieselsäureester der allgemeinen Formel (I), in der **a** den Wert 0 hat. Monomere und/oder polymere Kieselsäureester mit Alkoxyresten mit 1 bis 6 Kohlenstoffatomen und einer Viskosität von höchstens 20 mm²/s bei 25°C sind bevorzugt. Es kann ein bestimmter Kieselsäureester oder ein Gemisch verschiedener Kieselsäureester verwendet werden. Bevorzugte Kieselsäureester enthalten Alkoxyreste mit 1 bis 3 Kohlenstoffatomen und weisen eine Viskosität von 1 bis 5 mm²/s bei 25°C auf. Beispiele bevorzugter Kieselsäureester sind Tetramethylsilikat, Tetraethylsilikat und Tetraisopropylsilikat.

Weitere Bevorzugte Beispiele für Organosiloxane der allgemeinen Formel (I) sind Alkylalkoxysiloxane, wie solche, die durch Umsetzung von Methyltrichlorsilan und gegebenenfalls einem $C_1$-$C_8$-Alkyltrichlorsilan oder Phenyltrichlorsilan mit Methanol oder Ethanol in Wasser erhältlich sind, wie die Organopolysiloxane der Summenformeln

$$CH_3Si(OC_2H_5)_{0,8}O_{1,1},$$

$$C_6H_5Si(OC_2H_5)_{0,72}O_{1,14}$$

oder

$$(C_8H_{17}SiO_{3/2})(CH_3SiO_{3/2})_{1,8}x(CH_3O_{1/2})_{3,4},$$

mit einer Viskosität von vorzugsweise 5 bis 50 mm²/s bei 25°C.

Weitere bevorzugte Beispiele für Organosiloxane der allgemeinen Formel (I) sind lineare Organopolysiloxane, die in der Kette ausschließlich Einheiten enthalten, bei denen **b** den Wert 0 hat und Methyl-, Phenyl- oder 3,3,3-Trifluorpropylreste als Reste **R¹** enthalten und als endständige Gruppen Hydroxygruppen enthalten, wie die Polydimethylsiloxane mit an beiden Enden jeweils einer Hydroxylgruppe und einer Viskosität von vorzugsweise 100 bis 180 mm²/s bei 25°C; lineare Organopolysiloxane, die ausschließlich Einheiten enthalten, bei denen **b** den Wert 0 hat und als Reste **R¹** ausschließlich Methyl-, Phenyl- oder 3,3,3-Trifluorpropylreste enthalten, wie die Polydimethylsiloxane mit einer Viskosität von vorzugsweise 0,5 bis 10⁵ mm²/s bei 25°C und lineare Organopolysiloxane, die ausschließlich Einheiten enthalten, bei denen **b** den Wert 0 hat, die als Reste **R¹** ausschließlich Methyl-, Phenyl- oder Wasserstoffreste enthalten, wie die Polydimethylsiloxane mit einem Wasserstoffgehalt von 0,05 bis 5,0 Gew.-%, einer Kettenlänge von vorzugsweise 20 bis 70 Dimethylsiloxaneinheiten und einer Viskosität von vorzugsweise 10 bis 1000 mm²/s bei 25°C. Vorzugsweise ist an jedes Siliciumatom, an das ein Wasserstoffatom gebunden ist, auch ein Kohlenwasserstoffrest **R¹**, insbesondere ein Methylrest, gebunden.

Weitere bevorzugte Beispiele für Organosiloxane der allgemeinen Formel (I) sind verzweigte Organosiloxane, die als Reste **R¹** ausschließlich Alkylreste mit 1 bis 12 Kohlenstoffatomen enthalten, wie die Polydimethylsiloxane, die aus 2 bis 20 Siloxaneinheiten der Formeln $R^5(CH_3)SiO_{3/2}$, $R^5(CH_3)SiO_{1/2}$ und $R^5SiO_{3/2}$ bestehen, wobei **R⁵** einen Alkylrest mit 4 bis 12 Kohlenstoffatomen bedeutet.

Weitere bevorzugte Beispiele für Organosiloxane der allgemeinen Formel (I) sind Organosiloxanharze. Vorzugsweise hat **a** dann einen Wert von 0,8 bis 1,8, insbesondere von 1,0 bis 1,7. **b** hat dann vorzugsweise einen Wert von 0 bis 0,5 und die Summe von **a+b** hat maximal einen Wert von 1,9. Bevorzugte Organosiloxanharze sind aus Einheiten der Formeln $R^6_3SiO_{1/2}$, gegebenenfalls $R^6_2SiO_{2/2}$ und $SiO_{4/2}$ oder aus Einheiten der Formeln $R^6_2SiO_{2/2}$ und $R^6SiO_{3/2}$ aufgebaut, wobei **$R^6$** die in der vorstehenden allgemeinen Formel (III) bezeichneten Reste **$R^1$** oder **$OR^2$** bedeutet. Ein bevorzugtes Beispiel für ein Organosiloxanharz ist das Harz der Summenformel

$$MeSiO_{1,48}(OEt)_{0,04}$$

Weitere bevorzugte Beispiele für Organosiloxane der allgemeinen Formel (I) sind Organopolysiloxane der allgemeinen Formel (III)

$$R^7_c R^8_d (OR^9)_e SiO_{\frac{4-c-d-e}{2}} \qquad (III),$$

worin

**$R^7$**    einwertigen Kohlenwasserstoffrest mit 1 bis 10 Kohlenstoffatomen,
**$R^8$**    einwertigen aminosubstituierten Kohlenwasserstoffrest mit 1 bis 10 Kohlenstoffatomen,
**$R^9$**    einwertigen Alkylrest mit 1 bis 6 Kohlenstoffatomen,
**c**    0, 1, 2 oder 3,
**d**    0, 1, 2 oder 3 und
**e**    0, 1, 2 oder 3 bedeuten,

mit der Maßgabe, daß **d** durchschnittlich mindestens 0,05 ist,
die Summe aus **c, d** und **e** kleiner oder gleich 3 ist und der Rest **$R^8$** in Mengen von mehr als 0,5 Gewichtsprozent basischem Stickstoff pro Organopolysiloxanmolekül vorhanden ist.
Beispiele für Kohlenwasserstoffreste **$R^7$** und aminosubstituierte Kohlenwasserstoffreste **$R^8$** und bevorzugte Kohlenwasserstoffreste **$R^7$** und aminosubstituierte Kohlenwasserstoffreste **$R^8$** sind vorstehend für die Reste **$R^1$** und **$R^2$** aufgeführt.
Der bevorzugte durchschnittliche Wert für **c** ist 0 bis 2, insbesondere 0 bis 1,8.
Der bevorzugte durchschnittliche Wert für **d** ist 0,1 bis 0,6, insbesondere 0,15 bis 0,30. Der bevorzugte durchschnittliche Wert für **e** ist 0 bis 0,8, insbesondere 0,01 bis 0,6.
Die Organopolysiloxane der allgemeinen Formel (III) werden vorzugsweise in Salzform eingesetzt. Zur Herstellung des Salzes sind alle wasserlöslichen organischen und anorganischen Säuren geeignet, die sich in ihrer Salzform gegenüber dem Ton und gegebenenfalls weiteren siliciumorganischen und weiteren Bestandteilen der tonkeramischen Mischungen chemisch inert verhalten. Beispiele für derartige Säuren sind Salz-, Schwefel-, Phosphor-, Essigund Propionsäure. Essigsäure und Propionsäure sind bevorzugt.
Die tonkeramischen Mischungen weisen vorzugsweise mindestens 0,05 Gewichtsteile, insbesondere mindestens 0,1 Gewichtsteile siliciumorganische Verbindungen und vorzugsweise höchstens 10 Gewichtsteile, insbesondere höchstens 5 Gewichtsteile siliciumorganische Verbindungen jeweils bezogen auf 100 Gewichtsteile trockenen Ton auf.
Als Zusatzstoffe können die tonkeramischen Mischungen beispielsweise Magerungsmittel zur Verringerung der Schwindung, wie Quarz, Sand und gemahlenen gebrannten Ton; Flußmittel zur Senkung der Sintertemperatur, wie Feldspat und Metalloxide als Färbungsmittel oder zur Herstellung von Sonderkeramiken nichtoxidische Bestandteile, wie Carbide, Nitride und Silicide enthalten.
Die tonkeramischen Mischungen weisen vorzugsweise höchstens 200 Gewichtsteile, insbesondere höchstens 100 Gewichtsteile an Zusatzstoffen jeweils bezogen auf 100 Gewichtsteile trockenen Ton auf.
Die tonkeramischen Mischungen weisen vorzugsweise mindestens 15 Gewichtsteile, insbesondere mindestens 20 Gewichtsteile Wasser und vorzugsweise höchstens 40 Gewichtsteile, insbesondere höchstens 30 Gewichtsteile Wasser, jeweils bezogen auf 100 Gewichtsteile trockenen Ton auf.
Herstellungsbedingt können die tonkeramischen Mischungen bis zu 2 Gewichtsteilen, insbesondere bis zu 0,5 Gewichtsteilen Tensid, jeweils bezogen auf 100 Gewichtsteile trockenen Ton enthalten.
Gegenstand der Erfindung ist auch ein Verfahren zur Herstellung von tonkeramischen Erzeugnissen, bei dem aus Ton, vorstehenden siliciumorganischen Verbindungen und Wasser tonkeramische Mischungen hergestellt werden, aus den keramischen Mischungen Formkörper geformt werden, die Formkörper getrocknet und zu tonkeramischen Erzeugnissen gebrannt werden.
Die siliciumorganischen Verbindungen werden dem Ton vorzugsweise in Form von Lösung, Emulsion oder Mikroemulsion zugesetzt.

Anhand der folgenden Beispiele wird die Erfindung näher erläutert. Alle Angaben von Teilen und Prozentsätzen beziehen sich auf das Gewicht. Die Beispiele werden bei einem Druck der umgebenden Atmosphäre, also etwa bei 0,1 MPa, und bei Raumtemperatur, also etwa bei 21 °C, durchgeführt. Die Viskositäten wurden bei 25°C gemessen.

Beispiele

Zusammensetzung 1

**Herstellung von Organosiloxan A**

In einer kontinuierlich arbeitenden Umsetzungsanlage wurde ein Gemisch aus 2 Gew.-Teilen Methyltrichlorsilan und 1 Gew.-Teil i-Octyltrichlorsilan mit einem Gemisch aus 1 Gew.-Teil Wasser und 2 Gew.-Teilen Methanol derart in Reaktion gebracht, daß ein Hydrolysat mit einer Viskosität von 14 mm$^2$/s erhalten wurde.

**Herstellung von Organosiloxansalz B**

In einem 11-Dreihalskolben mit Rührer, Tropftrichter und Rückflußkühler wurden unter Rühren zu einem Gemisch aus 0,2 g KOH in 4 g Methanol und 500 g des Organopolysiloxans der Summenformel

$$CH_3Si(OC_2H_5)_{0,8}O_{1,1}$$

mit einem durchschnittlichen Molekulargewicht von etwa 600 g/Mol und einer Viskosität von etwa 20 mm$^2$/s 150 g N-(2-Aminoethyl)-3-aminopropyltrimethoxysilan gegeben und das so erhaltene Gemisch 6 Stunden zum Sieden unter Rückfluß erwärmt. Anschließend wurde auf 30°C gekühlt und mit 2,5 ml 10%-iger Salzsäure vermischt. Durch Erwärmen auf bis zu 140°C wurde schließlich das Methanol abdestilliert und das so erhaltene Salz B von KCl durch Filtrieren befreit. Das Salz B enthielt 2,9 % basischen Stickstoff, bezogen auf sein Gewicht.

**Herstellung Zusammensetzung 1**

24,2 Gew.-Teile des vorstehend beschriebenen Salzes B wurden nacheinander mit 6 Gew.-Teilen Eisessig, 45,6 Gew-Teilen Isooctyltrimethoxysilan, 13,8 Gew.-Teilen Tetraethylsilikat und 10,4 Gew.-Teilen des vorstehend beschriebenen Organosiloxans A vermischt und 5 Stunden auf 90°C erwärmt, wobei sich Zusammensetzung 1 als klare Lösung bildete. Zusammensetzung 1 konnte nach dem Abkühlen mit Wasser zu hochdispersen, durchsichtigen Gemischen verdünnt werden.

**Zusammensetzung 2**

42 Gew.-%ige Lösung von Kaliummethylsiliconat

**Zusammensetzung 3**

Ein Gemisch aus 675 Gewichtsteilen Isooctyltriethoxysilan, 50 Gewichtsteilen Zusammensetzung 1, 216 Gewichtsteilen des Organopolysiloxans der Summenformel

$$CH_3Si(OC_2H_5)_{0,8}O_{1,1}$$

mit einem durchschnittlichen Molekulargewicht von etwa 600 g/Mol und einer Viskosität von etwa 20 mm$^2$/s, 50 Gewichtsteilen Stearylaminoxethylat (Genamin® S-200, Hoechst AG) 2 Gewichtsteilen Butanol und 9 Gewichtsteilen Butyltitanat 1 Stunde bei 100°C gerührt. Nach dem Abkühlen erhält man Zusammensetzung 3.

**Zusammensetzung 4**

Emulsion von 60 Gewichtsteilen von im wesentlichen linearem Polydimethylsiloxan mit Trimethylsilylendgruppen der Viskosität von etwa 500 mm$^2$/s mit 6,7 Gewichtsteilen α-i-Tridecyl-whydroxypolyglykolether (Arlypon® IT 16 von Grünau GmbH) in 100 Gewichtsteilen Wasser.

**Zusammensetzung 5**

Emulsion von 50 Gewichtsteilen Harz bestehend aus 80 % $MeSiO_{3/2}$ und 20 % $Me_2SiO_{2/2}$ Einheiten und mit einer durchschnittlichen Viskosität von $10^6$ mm$^2$/s mit 3 Gewichtsteilen α-i-Tridecyl-whydroxypolyglykolether(Arlypon® IT 16 von Grünau GmbH) in 47 Gewichtsteilen Wasser.

**Zusammensetzung 6**

Emulsion von 50 Gewichtsteilen Kondensationsprodukt aus eines in den endständigen Einheiten je eine Si-gebundene Hydroxylgruppe aufweisenden , -Dihydroxymethylpolysiloxans und N(-2-Aminoethyl)-3-aminopropyltrimethoxysilan in Gegenwart von KOH mit einer Aminzahl von etwa 0,6, einer Viskosität von etwa 2000 mm$^2$/s bei 25 °C und einem Restmethoxygehalt von weniger als 5 Mol.-%, bezogen auf die anfangs im N(-2-Aminoethyl)-3-aminopropyltrimethoxysilan vorhandenen Methoxygruppen mit 5 Gewichtsteilen α-i-Tridecyl-w-hydroxypolyglykolether (Arlypon® IT 16 von Grünau GmbH) in 45 Gewichtsteilen Wasser.

Tonkeramische Mischungen und deren Trockenschwindungen

Jeweils 3,9 g der siliciumorganische Verbindungen enthaltenden Zusammensetzungen 1 bis 6 wurden mit 31,85 g Wasser zu 35,75 g Anmachwasser zu den entsprechenden tonkeramischen Mischungen 1 bis 6 verdünnt. Für die nicht erfindungsgemäße tonkeramische Mischung 7 wurde Wasser als Anmachwasser eingesetzt.

130 g einer auf Gewichtskonstanz getrockneten und zerkleinerten Tonmasse wurden mit den 35,75 g Anmachwasser vermischt und 24 Stunden in einem mit Glasplatte abgedeckten Becherglas gesumpft.

Aus den erhaltenen tonkeramischen Mischungen 1 bis 7 wurden rechteckige plastische keramische Formkörper mit den Dimensionen 10 mm x 50 mm x 100 mm unter Anwendung von 120 kg/cm$^2$ hergestellt, bei 23°C getrocknet und bei 1000 °C gebrannt.

Tabelle 1

| gibt die Werte für die Trockenschwindung [%] bei 23°C und nach Brand an: | | | | |
|---|---|---|---|---|
| | Schwindung | | | |
| Anmachwasser | Trockenzeit 3 Stunden | Trockenzeit 6 Stunden | Trockenzeit 24 Stunden | nach Brand bei 1000 °C |
| 1 | 2,00 | 3,50 | 6,00 | 9,00 |
| 2 | 1,49 | 3,47 | 5,94 | 8,00 |
| 3 | 2,00 | 4,00 | 6,00 | 8,50 |
| 4 | 2,00 | 4,00 | 6,50 | 9,50 |
| 5 | 1,52 | 3,03 | 6,06 | 9,10 |
| 6 | 1,50 | 4,00 | 7,00 | 9,50 |
| 7 (nur Wasser) | 1,50 | 3,50 | 8,00 | 10,0 |

**Patentansprüche**

1. Verwendung von tonkeramischen Mischungen, welche siliciumorganische Verbindungen enthalten, zur Herstellung von gebrannten tonkeramischen Erzeugnissen.

2. Verwendung nach Anspruch 1, bei denen die siliciumorganischen Verbindungen aus Einheiten der allgemeinen Formel (I)

$$R^1_a(OR^2)_bSiO_{\frac{4-a-b}{2}} \qquad (I),$$

aufgebaut sind, worin

**R¹** ein Wasserstoff oder einwertigen, gegebenenfalls mit Halogenatomen oder Aminogruppen substituierten Kohlenwasserstoffrest,

**R²** Wasserstoffatom, Alkalimetallatom oder einwertigen gegebenenfalls mit Halogenatomen oder Aminogruppen substituierten Kohlenwasserstoffrest,

**a** den Wert 0, 1, 2, 3 oder 4 und

**b** den Wert 0, 1, 2, 3 oder 4 bedeutet, mit der Maßgabe, daß die Summe aus a und b kleiner oder gleich 4 ist.

3. Verwendung nach Anspruch 1 oder 2, wobei die Mischungen 0,1 bis 10 Gewichtsteile siliciumorganische Verbindungen, jeweils bezogen auf 100 Gewichtsteile trockenen Ton aufweisen.

4. Verfahren zur Herstellung von tonkeramischen Erzeugnissen, bei dem aus Ton, siliciumorganischen Verbindungen und Wasser tonkeramische Mischungen hergestellt werden, aus den tonkeramischen Mischungen Formkörper geformt werden, die Formkörper getrocknet und zu tonkeramischen Erzeugnissen gebrannt werden.

5. Verfahren nach Anspruch 4, bei dem die siliciumorganischen Verbindungen dem Ton in Form von Lösung, Emulsion oder Mikroemulsion zugesetzt werden.

## Claims

1. Use of clay ceramic mixtures containing organosilicon compounds for producing fired clay ceramic products.

2. Use according to Claim 1, wherein the organosilicon compounds comprise units of the formula (I)

$$R^1{}_a(OR^2)_b SiO_{\frac{4-a-b}{2}} \tag{I},$$

where

R¹ is hydrogen or a monovalent, unsubstituted or halogen- or amino-substituted hydrocarbon radical,

R² is a hydrogen atom, an alkali metal atom or a monovalent, unsubstituted or halogen- or amino- substituted hydrocarbon radical,

a is 0, 1, 2, 3 or 4 and

b is 0, 1, 2, 3 or 4,

with the proviso that the sum of a and b is less than or equal to 4.

3. Use according to Claim 1 or 2, wherein the mixtures contain from 0.1 to 10 parts by weight of organosilicon compounds, in each case based on 100 parts by weight of dry clay.

4. Process for producing clay ceramic products, in which clay ceramic mixtures are prepared from clay, organosilicon compounds and water, shaped bodies are made from the clay ceramic mixtures, the shaped bodies are dried and fired to produce clay ceramic products.

5. Process according to Claim 4, in which the organosilicon compounds are added in the form of a solution, emulsion or microemulsion to the clay.

## Revendications

1. Utilisation de compositions céramiques à base d'argile, qui contiennent des composés organosiliciés, pour la fabrication de produits céramiques à base d'argile cuits.

2. Utilisation selon la revendication 1, dans laquelle les composés organosiliciés sont constitués de motifs de formule générale (I)

$$R^1_a(OR^2)_b SiO_{\frac{4-a-b}{2}} \qquad (I)$$

dans laquelle

R¹ représente un atome d'hydrogène ou un radical hydrocarboné monovalent, éventuellement substitué par des atomes d'halogène ou des groupes amino,

R² représente un atome d'hydrogène, un atome de métal alcalin ou un radical hydrocarboné monovalent, éventuellement substitué par des atomes d'halogène ou des groupes amino,

a a la valeur 0, 1, 2, 3 ou 4 et

b a la valeur 0, 1, 2, 3 ou 4,

étant entendu que la somme de a et b est inférieure ou égale à 4.

3. Utilisation selon la revendication 1 ou 2, dans laquelle les compositions comportent de 0,1 à 10 parties en poids de composés organosiliciés, dans chaque cas par rapport à 100 parties en poids d'argile sèche.

4. Procédé pour la fabrication de produits céramiques à base d'argile, dans lequel on prépare à partir d'argile, de composés organosiliciés et d'eau des compositions céramiques à base d'argile, des corps moulés sont mis en forme à partir des compositions céramiques à base d'argile, les corps moulés sont séchés et cuits pour donner des produits céramiques à base d'argile.

5. Procédé selon la revendication 4, dans lequel les composés organosiliciés sont ajoutés à l'argile sous forme de solution, émulsion ou microémulsion.